# EUROPÄISCHE PATENTSCHRIFT

(11) **EP 1 293 858 B1**
(45) Veröffentlichungstag und Bekanntmachung des Hinweises auf die Patenterteilung: **22.08.2007**
(21) Anmeldenummer: 02012969.8
(22) Anmeldetag: 12.06.2002
(51) Int. Cl.: G06F 1/00

(54) **Verfahren zum Schutz eines Mikrorechner-Systems gegen Manipulation seines Programms**
Method for protecting a microcomputer system against software manipulation
Procédé de protection d'un système à microprocesseur contre la manipulation de ses logiciels

(30) Priorität: 02.07.2001 DE 10131576
(43) Veröffentlichungstag der Anmeldung: 19.03.2003
(73) Patentinhaber: ROBERT BOSCH GMBH, 70442 Stuttgart (DE)
(72) Erfinder: Mittag, Andreas, 71706 Markgroeningen (DE); Frank, Rainer, 74343 Sachsenheim (DE)

(56) Entgegenhaltungen:
- EP-A- 0 707 270
- EP-A- 0 939 012
- EP-A- 0 962 850
- DE-A- 19 723 332
- US-A- 5 191 608
- US-A- 5 421 006
- US-A- 5 787 367

## Beschreibung

Die vorliegende Erfindung betrifft ein Verfahren zum Schutz eines Mikrorechner-Systems gegen Manipulation seines Programms. Das Mikrorechner-System weist einen wiederbeschreibbaren Speicher auf, in dem mindestens ein Teil des Programms gespeichert wird. Bei dem Verfahren wird ausgehend von einem Startwert über zumindest einen Teil des Inhalts des wiederbeschreibbaren Speichers ein Codewort gebildet.

Die Erfindung betrifft außerdem ein gegen Manipulation seines Programms geschütztes Mikrorechner-System mit einem nur-Lese-Speicher und einem wiederbeschreibbaren Speicher, in dem mindestens ein Teil des Programms gespeichert ist. Zum Schutz des Mikrorechner-Systems wird ausgehend von einem Startwert über zumindest einen Teil des wiederbeschreibbaren Speichers eine Codewortbildung ausgeführt.

### Stand der Technik

Ein Verfahren und ein Mikrorechner-System der eingangs genannten Art ist beispielsweise aus der DE 197 23 332 A1 bekannt. Das dort beschriebene Verfahren dient insbesondere zum Schutz eines Kraftfahrzeugsteuergeräts gegen Manipulation seines Steuerprogramms. Das Steuergerät dient zur Steuerung und/oder Regelung von Kraftfahrzeugfunktionen, beispielsweise einer Brennkraftmaschine, einer elektronischen Steuerung (steer-by-wire) oder einer elektronischen Bremse (brake-by-wire). Bei dem bekannten Verfahren wird bei jedem Start des Mikrorechner-Systems eine Bootroutine und als Teil der Bootroutine ein Überprüfungsprogramm ausgeführt. Das Überprüfungsprogramm ist in einem nur-Lese-Speicher des Mikrorechner-Systems abgelegt. Im Rahmen der Ausführung des Überprüfungsprogramms wird aus zumindest einem Teil des Speicherinhalts des wiederbeschreibbaren Speichers mit Hilfe eines Verschlüsselungsalgorithmus ein Codewort ermittelt und mit einem in dem wiederbeschreibbaren Speicher abgelegten Vergleichscodewort verglichen. Das Codewort ist beispielsweise eine Checksumme. Die Ausführung des in dem wiederbeschreibbaren Speicher des Steuergeräts abgelegten Steuerprogramms wird blockiert, falls das ermittelte Codewort nicht gleich dem Vergleichscodewort ist.

Falls in dem wiederbeschreibbaren Speicher ein manipuliertes Programm abgelegt wurde, weicht das über den Speicherinhalt des wiederbeschreibbaren Speichers ermittelte Codewort in aller Regel von dem abgelegten Vergleichscodewort ab. Die Ausführung des manipulierten Programms wird blockiert. Dadurch wird verhindert, dass die von dem Steuergerät zu steuernden oder zu regelnden Kraftfahrzeugfunktionen oder Kraftfahrzeugeinheiten aufgrund einer Manipulation des Steuerprogramms beschädigt werden.

In der amerikanischen Gesetzgebung für OBD II (On-Board Diagnostic Ver. II) ist für Kraftfahrzeuge vorgeschrieben, dass Steuergeräte für Brennkraftmaschinen eine Selbstdiagnose ausführen. Im Rahmen dieser Verordnung werden bestimmte Abgasgrenzwerte festgelegt und wird ein Nachweis vorgeschrieben, dass keine Manipulationen an Teilen eines Steuergeräts vorgenommen wurden, die Einfluss auf die Abgaswerte des Kraftfahrzeuges haben. Um diesen Nachweis führen zu können, ist vorgeschrieben, dass eine Checksumme über eine Diagnoseschnittstelle des Steuergeräts ausgegeben wird. In Tabellen, die für jedermann zugänglich sind, sind Kraftfahrzeugtyp und Checksumme des entsprechenden Steuergeräts veröffentlicht. Eine Manipulation an dem Steuerprogramm führt in aller Regel zu einer veränderten Checksumme, die von der in der Tabelle abgelegten Checksumme abweicht. Dadurch kann der Nachweis einer Manipulation an abgasrelevanten Steuergerätteilen erbracht werden.

Eine solche Datenausgabe über die Diagnoseschnittstelle zeigt auch die US 5,787,367. Dabei soll eine abgesicherte Programmierung erzielt werden von on-board Computersystemen bei einem Fahrzeug. In diesem Stand der Technik erfolgt die Absicherung über eine serielle Identifikationsnummer und den Vergleich mit einem abgespeicherten Passwort.

Ein Problem bei dem bekannten Verfahren ist es jedoch, dass die Verschlüsselungsalgorithmen für die Berechnung des Codeworts in der Regel allgemein bekannt und öffentlich zugänglich sind oder aber auf relativ einfache Weise ermittelt werden können. Durch die Bekanntheit und öffentliche Zugänglichkeit der Algorithmen verringert sich die Wirksamkeit einer Codewortbildung zum Manipulations- und/oder Tuningschutz des Programms eines Mikrorechner-Systems. Hinzu kommt, dass die aus dem Stand der Technik bekannten Verschlüsselungsalgorithmen alle mit ein und demselben Startwert beginnen. Bei dem CRC 16 (Cyclic Redundancy Check, 16 bit) -Verschlüsselungsalgorithmus wird als Startwert immer FFFFₕₑₓ verwendet. Bei dem Verschlüsselungsalgorithmus CRC 32 wird als Startwert immer FFFFFFFFₕₑₓ verwendet.

Dazu zeigt die EP 0707270A2 ein Verfahren und eine Vorrichtung zur Validierung des Betriebes eines Systems. Dabei ist ein Chip Identifier vorgesehen, der für jeden Chip einzigartig ist und als Startwert für eine Verschlüsselung dient, anhand derer dann die Validierung erfolgt. Ebenso ist ein zweiter Chip Identifier vorgesehen, der zur Erhöhung des Validierungslevels als Startwert dient und einzigartig im Hinblick auf das Computersystem ist, in dem sich der Chip befindet. Dabei dient der Startwert, also der zweite Identifier ebenso der Verschlüsselung, wobei beide Chip Identifier verglichen werden. Die EP 0707270A2 zeigt somit ein sehr aufwändiges und komplexes System zur Verschlüsselung einzigartiger Startwerte.

US5191608 zeigt ein Verfahren und eine Vorrichtung zur Validierung einer Chipkarte und einem darauf enthaltenen Programm. Die Validierung geschieht mit Hilfe einer Signatur die aus dem Programm sowie aus einer Identifikation der Chipkarte selbst und/oder einen Geheimcode erstellt wurde.

Der vorliegenden Erfindung liegt die Aufgabe zugrunde, die Wirksamkeit einer Codewortbildung als Manipulations- bzw. Tuningschutz für ein Programm eines Mikrorechner-Systems zwar einerseits zu erhöhen, andererseits aber den Aufwand dafür zu begrenzen.

Zur Lösung dieser Aufgabe schlägt die Erfindung ausgehend von dem Verfahren der eingangs genannten Art vor, dass der Startwert zur Bildung des Codeworts in Abhängigkeit vom Mikrorechner-System-Typ vorgegeben wird.

### Vorteile der Erfindung

Der Startwert der Codewortbildung wird für bestimmte Mikrorechnergruppen gemeinsam vorgegeben. Der Startwert wird geheimgehalten, so dass Dritte bei einer Manipulation des in dem wiederbeschreibbaren Speicher abgelegten Programms außer dem Verschlüsselungsalgorithmus für die Codewortbildung auch den Startwert kennen müssten, um sicherzugehen, dass bei einer Codewortprüfung das manipulierte Programm nicht erkannt werden würde. Das Codewort ist beispielsweise eine Checksumme. Durch die erfindungsgemäße Maßnahme wird die Wirksamkeit der Codewortbildung als Manipulations- bzw. Tuningschutz deutlich erhöht.

Gemäß der vorliegenden Erfindung wird vorgeschlagen, dass der Startwert zur Bildung des Codewort in Abhängigkeit von dem Mikrorechner-Systemtyp vorgegeben wird. Gemäß dieser Weiterbildung bilden also Mikrorechner-Systeme desselben Typs eine Mikrorechnergruppe, der der gleiche Startwert zur Bildung des Codeworts zugewiesen wird.

Gemäß einer bevorzugten Ausführungsform der vorliegenden Erfindung wird vorgeschlagen, dass das Codewort über eine Diagnoseschnittstelle des Mikrorechner-Systems ausgegeben wird. Das ausgegebene Codewort kann mit einem in einer öffentlich zugänglichen Tabelle abgelegten Vergleichscodewort für das entsprechende Mikrorechner-System oder den entsprechenden Mikrorecher-Systemtyp verglichen werden. Falls das ausgegebene Codewort und das Vergleichscodewort nicht übereinstimmen, kann von einer Manipulation des Programms des Mikrorechner-Systems ausgegangen werden.

Gemäß einer anderen bevorzugten Ausführungsform der vorliegenden Erfindung wird vorgeschlagen, dass in dem Mikrorechner-System das Codewort überprüft und die Ausführung des in dem wiederbeschreibbaren Speicher abgelegten Programms des Mikrorechner-Systems blockiert wird, falls das gebildete Codewort nicht gleich einem vorgegebenen Vergleichscodewort ist. Gemäß dieser Ausführungsform wird also das gebildete Codewort mikrorechnerintern mit einem vorgegebenen Vergleichscodewort verglichen und bei einer Nichtübereinstimmung der beiden Codeworte die weitere Ausführung des in dem wiederbeschreibbaren Speicher des Mikrorechner-Systems abgelegten Programms blockiert.

Die vorliegende Erfindung schlägt außerdem eine besonders vorteilhafte Verwendung des erfindungsgemäßen Verfahrens zum Schutz eines Kraftfahrzeugsteuergeräts gegen Manipulation seines Steuerprogramms vor, wobei das Steuergerät zur Steuerung und/oder Regelung einer Kraftfahrzeugfunktion dient.

Als eine weitere Lösung der Aufgabe der vorliegenden Erfindung wird ausgehend von dem Mikrorechner-System der eingangs genannten Art vorgeschlagen, dass in dem nur-Lese-Speicher ein mikrorechnerindividueller Startwert der zur Bildung des Codeworts gespeichert ist. Der Startwert kann von außerhalb des Mikrorechner-Systems nicht aus dem nur-Lese-Speicher ausgelesen werden, noch kann der Startwert überschrieben werden.

Gemäß einer vorteilhaften Weiterbildung der Erfindung wird vorgeschlagen, dass das Mikrorechner-System bei jedem Start eine Bootroutine ausführt und dass die Codewortbildung und ein Vergleich des gebildeten Codeworts mit einem vorgegebenen Vergleichscodewort Teil der Bootroutine ist. Durch diese Weiterbildung kann eine besonders hohe Manipulations- bzw. Tuningschutzsicherheit mit der Codewortbildung erreicht werden. Alternativ hierzu kann die Codewortbildung und ein Vergleich des gebildeten Codeworts mit dem Vergleichscodewort lediglich bei einem, vorzugsweise beim ersten Start des Mikrorechner-Systems ausgeführt werden. Bei einer Übereinstimmung bzw. einer Nichtübereinstimmung des gebildeten Codeworts mit dem Vergleichscodewort kann eine vorgebbare Kennung in einem Speicher des Mikrorechner-Systems abgelegt werden. Bei jedem weiteren Start des Mikrorechner-Systems muß dann lediglich die gespeicherte Kennung überprüft werden und die Ausführung des Programms wird entweder fortgesetzt oder blockiert.

Gemäß einer bevorzugten Ausführungsform der vorliegenden Erfindung wird vorgeschlagen, dass bei Nichtübereinstimmung eines gebildeten Codeworts mit einem vorgegebenen Vergleichscodewort die Ausführung des in dem wiederbeschreibbaren Speicher abgelegten Programms des Mikrorechner-Systems gesperrt ist.

Der wiederbeschreibbare Speicher des Mikrorechner-Systems ist vorteilhafterweise als ein EPROM (Erasable Programmable Read Only Memory) oder als ein EEPROM (Electronically Erasable Programmable Read Only Memory), insbesondere als ein Flash-Speicher, ausgebildet. Des weiteren wird vorgeschlagen, dass der nur-Lese-Speicher als ein ausgewählter Bereich in dem Flash-Speicher ausgebildet ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsgemäßes Mikrorechner-System gemäß einer bevorzugten Ausführungsform;
- Figur 2: ein Ablaufdiagramm eines erfindungsgemäßen Verfahrens gemäß einer bevorzugten Ausführungsform; und
- Figur 3: eine Tabelle zur Verdeutlichung der Auswirkung unterschiedlicher Startwerte auf die Checksumme.

### Beschreibung der Ausführungsbeispiele

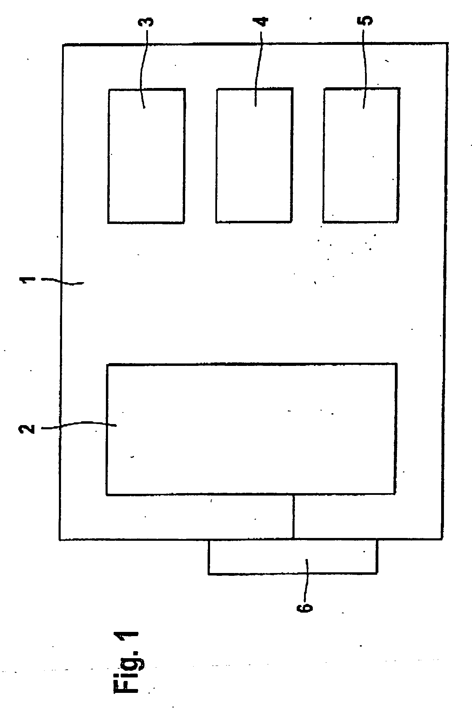

In Figur 1 wird ein Mikrorechner-System 1 gezeigt, das einen Rechnerkern 2 (Central Processing Unit, CPU) und mehrere Speicher 3, 4, 5 aufweist. Bei dem Speicher 3 handelt es sich um einen Nur-Lese-Speicher (Read Only Memory, ROM), bei dem Speicher 4 um einen Schreib/Lesespeicher (Random Access Memory, RAM) und bei dem Speicher 5 um einen wiederbeschreibbaren Speicher (Erasable Programmable Read Only Memory, EPROM, Electronically Erasable Programmable Read Only Memory, EEPROM oder Flash-EPROM). In den Speichern 3, 4, 5 sind Programmbefehle oder Daten gespeichert, die durch den Rechnerkern 2 verarbeitet werden. Dabei sind je nach Art des Speichers 3, 4, 5 unterschiedliche Daten oder Programme abgelegt.

Der nur-Lese-Speicher 3 enthält ein festgespeichertes Programm, welches nur durch Herstellung eines neuen Speicherbausteins geändert werden kann. In diesem Speicher wird daher in der Regel ein Minimalprogramm abgelegt, welches der Rechnerkern 2 in die Lage versetzt, Befehle zu verarbeiten, die in anderen Speichermedien, insbesondere dem wiederbeschreibbaren Speicher 5, gespeichert sind. Der Schreib/Lesespeicher 4 ist nur während des laufenden Betriebs des Mikrorechner-Systems 1 in der Lage, Daten zu speichern, und dient daher nur zur Ablage von Daten oder von Programmbefehlen während des laufenden Betriebs des Mikrorechner-Systems 1. Auf die Speicherinhalte des Schreib/Lesespeichers 4 kann besonders schnell zugegriffen werden, so dass teilweise auch Programme von anderen Speichermedien, beispielsweise aus dem nur-Lese-Speicher 3 oder dem wiederbeschreibbaren Speicher 5 in den Schreib/Lesespeicher 4 übertragen werden, um von dort aus ausgeführt zu werden. Der wiederbeschreibbare Speicher 5, der in dem vorliegenden Ausführungsbeispiel als EPROM oder als Flash-EPROM ausgeführt ist, enthält Programmabschnitte oder Daten, die in einem gewissen Rahmen veränderbar sein sollen. Dadurch wird es möglich, das Mikrorechner-System 1 an unterschiedliche Aufgaben anzupassen. Dies ist besonders vorteilhaft, wenn das Mikrorechner-System 1 als Steuergerät für ein Kraftfahrzeug angewendet wird. In dem Nur-Lese-Speicher 3 werden dann neben dem Minimalprogramm auch Steuerprogramme für die Brennkraftmaschine oder andere Kraftfahrzeugfunktionen abgelegt. In-dem wiederbeschreibbaren Speicher 5 werden dann Daten, beispielsweise Parameter oder Grenzwerte für den Betrieb der Brennkraftmaschine, abgelegt, auf die das Steuerprogramm zugreift.

Weiterhin können zusätzliche Programm-Module in dem wiederbeschreibbaren Speicher 5 abgelegt werden, die z. B. nicht bei jedem Steuergerät verwirklicht werden sollen. Es ist so möglich, ein Steuergerät für unterschiedliche Anwendungen zu verwenden. Die Steuerfunktionen, die für alle Anwendungen gleich sind, werden in dem nur-Lese-Speicher 3 abgelegt, während die Programme oder Daten, die sich bei den einzelnen Anwendungen unterscheiden, im wiederbeschreibbaren Speicher 5 abgelegt werden.

Problematisch ist dabei jedoch, dass diese erhöhte Flexibilität mit dem Risiko verbunden ist, dass Unbefugte den Speicherinhalt des wiederbeschreibbaren Speichers 5 verändern. In der Anwendung bei Kraftfahrzeugen könnte auf diese Weise beispielsweise die Leistung der Brennkraftmaschine durch einen Austausch von Programmen oder Daten in dem wiederbeschreibbaren Speicher 5 erhöht werden. Diese Leistungssteigerung durch Manipulation des Steuerprogramms oder der Daten kann jedoch zu einer Überlastung der Brennkraftmaschine und schließlich sogar zu einem Defekt der Brennkraftmaschine führen. Um eine derartige unerwünschte Manipulation am Speicherinhalt des wiederbeschreibbaren Speichers 5 zu verhindern, wird in dem nur-Lese-Speicher 3 ein Überprüfungsprogramm vorgesehen, welches in der Lage ist, den Inhalt des Speichers 5 auf derartige unzulässige Änderungen zu untersuchen.

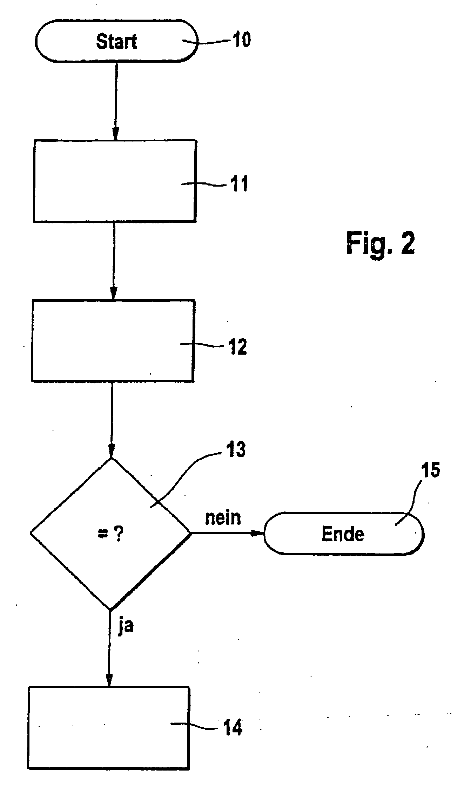

In Figur 2 ist ein Ablaufdiagramm eines erfindungsgemäßen Verfahrens dargestellt. Das Verfahren beginnt in einem Funktionsblock 10. In einem Funktionsblock 11 erfolgen notwendige Maßnahmen, um den Rechnerkern 2 zur Bearbeitung von Programmen vorzubereiten. Dabei werden interne Register des Rechnerkerns 2 auf Ausgangswerte (sogenannte Defaultwerte) gesetzt, und der Rechnerkern 2 wird so in die Lage versetzt, Ein- und Ausgabeoperationen, die zur Bearbeitung von Befehlen notwendig sind, vorzunehmen.

Nach der Ausführung eines solchen Minimalprogramms bzw. einer derartigen Bootroutine wird dann in einem Funktionsblock 12 aus zumindest einem Teil der in dem wiederbeschreibbaren Speicher 5 enthaltenen Daten ein Codewort ermittelt. Ein einfaches Beispiel für ein derartiges Codewort ist eine Checksumme. Anhand einer Checksumme kann eine Aussage über den Zustand der in dem Speicher 5 abgelegten Daten gemacht werden. Eine Checksumme wird ermittelt, indem mathematische Berechnungen (sogenannte Verschlüsselungsalgorithmen) über zumindest einen Teil der in dem Speicher 5 abgelegten Daten ausgeführt werden. Das Resultat dieser Berechnungen heißt Checksumme.

Ein Codewort kann mittels mehr oder weniger aufwendiger mathematischer Verschlüsselungsverfahren ermittelt werden, die ohne genaue Kenntnis des Verschlüsselungsalgorithmus einem Unbefugten nicht erlauben, aus dem Inhalt des wiederbeschreibbaren Speichers 5 das Codewort zu ermitteln. In einem Abfrageblock 13 erfolgt dann ein Vergleich des so ermittelten Codeworts mit einem Vergleichscodewort, das beispielsweise in dem wiederbeschreibbaren Speicher 5 gespeichert ist. Wenn das Codewort und das Vergleichscodewort miteinander übereinstimmen, wird das weitere Programm, hier durch einen Funktionsblock 14 dargestellt, fortgesetzt. Wenn das Codewort und das Vergleichscodewort nicht übereinstimmen, wird das Mikrorechner-System 1 für den weiteren Betrieb gesperrt. Das Verfahren wird in einem Funktionsblock 15 beendet.

Ein berechtigter Benutzer, der den Inhalt des wiederbeschreibbaren Speichers 5 ändern möchte, ermittelt somit mit dem nur ihm bekannten Verschlüsselungsalgorithmus aus dem in dem Speicher 5 abzulegenden Programm ein Vergleichscodewort und legt dieses dann in dem Speicher 5 ab. Nach der Durchführung des Überprüfungsprogramms wird dann das Mikrorechner-System 1 ordnungsgemäß arbeiten. Eine unberechtigte Änderung des Speicherinhalts des wiederbeschreibbaren Speichers 5 scheitert daran, dass der Verschlüsselungsalgorithmus nicht bekannt ist, so dass es nicht möglich ist, in dem wiederbeschreibbaren Speicher 5 ein korrektes Vergleichscodewort abzulegen. Das Überprüfungsprogramm erkennt, dass das Codewort und das Vergleichscodewort unterschiedlich sind und sperrt das Mikrorechner-System 1 für die Bearbeitung weiterer Aufgaben. Unerwünschte Manipulationen an dem Speicherinhalt des wiederbeschreibbaren Speichers 5 werden somit zuverlässig erkannt und ein Betrieb des Mikrorechner-Systems mit einem manipulierten Programm unterbunden.

Die Wirksamkeit des Schutzes des Mikrorechner-Systems 1 gegen Manipulation seines Programms kann gemäß der vorliegenden Erfindung noch dadurch deutlich erhöht werden, dass der Startwert zur Bildung des Codeworts mikrorechnerindividuell vorgegeben wird. Das bedeutet also, dass bei der Bildung des Codeworts nicht grundsätzlich von dem gleichen Startwert ausgegangen wird, sondern, dass dieser für verschiedene Mikrorechner-Systeme variabel vorgebbar ist. Nach dem Stand der Technik wird von einem Ausgangswert oder Default-Wert als Startwert zur Bildung des Codeworts ausgegangen. Als Default-Wert wird beispielsweise FFFFₕₑₓ bei dem CRC 16-Verschlüsselungsalgorithmus (Cyclic Redundancy Check, 16 bit) und FFFFFFFFₕₑₓ bei dem CRC 32-Verschlüsselungsalgorithmus verwendet. Gemäß der vorliegenden Erfindung muss ein berechtigter Benutzer, der den Inhalt des wiederbeschreibbaren Speichers 5 ändern will, somit neben dem Verschlüsselungsalgorithmus auch den Startwert des entsprechenden Mikrorechner-Systems einkennen, um ein gültiges Vergleichscodewort ermitteln zu können, das dann in dem Speicher 5 abgelegt wird. Die Wirksamkeit des Manipulations- bzw. Tuningschutzes wird durch die vorliegende Erfindung somit deutlich erhöht.

Der Startwert kann von Mikrorechner-System 1 zu Mikrorechner-System 1 variiert werden. Es ist jedoch auch denkbar, für eine Gruppe mehrerer Mikrorechner den gleichen Startwert, vorzugeben, d. h. den Startwert in Abhängigkeit von dem Mikrorechner-Systemtyp vorzugeben. Das Codewort kann über eine Diägnoseschnittstelle 6 des Mikrorechner-Systems ausgegeben werden.

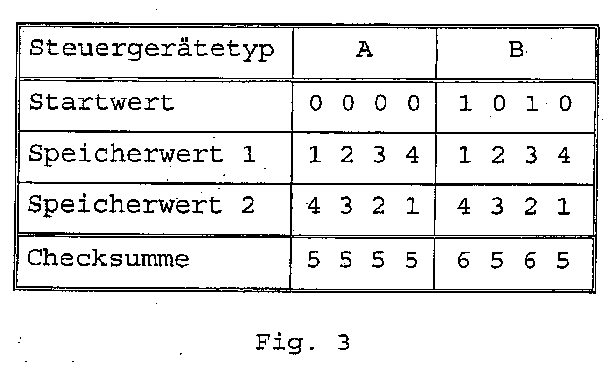

Das erfindungsgemäße Verfahren wird anhand der Tabelle aus Figur 3 näher erläutert. Dort ist für zwei unterschiedliche Steuergerätetypen A und B erläutert, wie sich trotz des gleichen Inhalts des wiederbeschreibbaren Speichers 5, nämlich Speicherwert 1 und Speicherwert 2, aufgrund der unterschiedlichen Startwerte 0000 und 1010 verschiedene Checksummen 5555 und 6565 ergeben. Das in Figur 3 dargestellte Verfahren nutzt einen besonders einfachen Verschlüsselungsalgorithmus, der darin besteht, den Speicherwert 1 und den Speicherwert 2 zu einem Startwert zu addieren. In der Praxis werden üblicherweise wesentlich aufwendigere Verschlüsselungsalgorithmen angewandt, um einen wirksamen Manipulations- bzw. Tuningschutz zu bieten.

Das Überprüfungsprogramm kann auch so ausgelegt werden, dass nur einzelne Bereiche des wiederbeschreibbaren Speichers 5 überprüft werden. Weiterhin ist es möglich, das Überprüfungsprogramm so auszulegen, dass für unterschiedliche Bereiche des wiederbeschreibbaren Speichers 5 unterschiedliche Verschlüsselungsalgorithmen angewendet werden und für jeden dieser Bereiche ein eigenes Codewort abgelegt wird. Es können so einzelne Bereiche des wiederbeschreibbaren Speichers 5 wahlweise für eine neue Programmierung gesperrt werden oder wahlweise freigegeben werden.

Weiterhin ist es auch möglich, statt einer kompletten Sperrung des Mikrorechner-Systems 1 bei einer Abweichung von Codewort und Vergleichswort eine nur teilweise Sperrung vorzusehen. Wenn beispielsweise das Mikrorechner-System 1 als Steuergerät für die Steuerung oder Regelung einer Brennkraftmaschine verwendet wird, kann vorgesehen werden, dass bei einer unberechtigten Manipulation des Kennfelds für den Zündwinkel statt einer Sperrung der Funktion ein Zündwinkel herangezogen wird, der noch einen leistungsverminderten Betrieb der Brennkraftmaschine erlaubt und gleichzeitig eine Aufforderung auslöst, das Fahrzeug bei einer Werkstatt reparieren zu lassen. Auf diese Weise kann sichergestellt werden, dass auch bei einer zufälligen Veränderung des Inhalts des wiederbeschreibbare Speichers 5 noch eine gewisse Minimalfunktion des Mikrorechner-Systems 1 ausgeübt wird.

Weiterhin ist es möglich, das Überprüfungsprogramm zunächst in einem inaktiven Zustand zu lassen und so zunächst noch Veränderunge des Speicherinhalts des wiederbeschreibbaren Speichers 5 zuzulassen. Dies ist insbesondere für eine Entwicklungsphase, bei der noch häufig Modifikationen des in dem wiederbeschreibbaren Speicher 5 gespeicherten Programms erforderlich sind, von Vorteil (sogenanntes Applikationsgerät). Nach dem Ende der Entwicklung wird dann durch die Aktivierung des Überprüfungsprogramms sichergestellt, dass weitere Manipulationen nur mit Kenntnis des Verschlüsselungsalgorithmus und des Startwerts möglich sind (sogenanntes Seriengerät).

## Patentansprüche

1. Verfahren zum Schutz eines Mikrorechner-Systems (1) gegen Manipulation seines Programms, wobei das Mikrorechner-System (1) einen wiederbeschreibbaren Speicher (5) aufweist, in dem mindestens ein Teil des Programms gespeichert wird, bei dem ausgehend von einem Startwert über zumindest einen Teil des Inhalts des wiederbeschreibbaren Speichers (5) ein Codewort gebildet wird, **dadurch gekennzeichnet, dass** aus Mikrorechner-Systemen desselben Typs eine Mikrorechnergruppe gebildet wird und dass der Startwert zur Bildung des Codeworts in Abhängigkeit von dem Mikrorechner-Systemtyp vorgegeben wird, wobei der Startwert für die Mikrorechnergruppe gleich ist.

2. Verfahren nach Anspruch 1, **dadurch gekennzeichnet, dass** das Codewort über eine Diagnoseschnittstelle (6) des Mikrorechner-Systems (1) ausgegeben wird.

3. Verfahren nach einem der Ansprüche 1 oder 2, **dadurch gekennzeichnet, dass** in dem Mikrorechner-System (1) das gebildete Codewort überprüft und die Ausführung des in dem wiederbeschreibbaren Speicher (5) abgelegten Programms des Mikrorechner-Systems (1) blockiert wird, falls das Codewort nicht gleich einem vorgegebenen Vergleichscodewort ist.

4. Verwendung eines Verfahrens nach einem der Ansprüche 1 bis 3, **dadurch gekennzeichnet, dass** das Verfahren zum Schutz eines Kraftfahrzeugsteuergeräts gegen Manipulation seines Steuerprogramms verwendet wird, wobei das Steuergerät zur Steuerung und/oder Regelung einer Kraftfahrzeugfunktion dient.

5. Gegen Manipulation seines Programms geschütztes Mikrorechner-System (1) mit einem nur-Lese-Speicher (3) und einem wiederbeschreibbaren Speicher (5), in dem mindestens ein Teil des Programms gespeichert ist, wobei zum Schutz des Mikrorechner-Systems (1) ausgehend von einem Startwert über zumindest einen Teil des wiederbeschreibbaren Speichers (5) eine Codewortbildung ausführbar ist, **dadurch gekennzeichnet, dass** in dem nur-Lese-Speicher (3) ein Startwert zur Bildung des Codeworts gespeichert ist, wobei aus Mikrorechnersystemen desselben Typs eine Mikrorechnergruppe gebildet wird und der Startwert derart ausgebildet ist, dass dieser in Abhängigkeit von dem Mikrorechnersystemtyp vorgegeben wird und der Startwert für die Mikrorechnergruppe gleich ist.

6. Mikrorechner-System (1) nach Anspruch 5, **dadurch gekennzeichnet, dass** das Mikrorechner-System (1) bei jedem Start eine Bootroutine ausführt und dass die Codewortbildung und ein Vergleich des gebildeten Codeworts mit einem vorgegebenen Vergleichscodewort Teil der Bootroutine ist.

7. Mikrorechner-System (1) nach Anspruch 5 oder 6, **dadurch gekennzeichnet, dass** bei Nichtübereinstimmung eines gebildeten Codeworts mit einem vorgegebenen Vergleichscodewort die Ausführung des in dem wiederbeschreibbaren Speicher (5) abgelegten Programms des Mikrorechner-Systems (1) gesperrt ist.

8. Mikrorechner-System (1) nach einem der Ansprüche 5 bis 7, **dadurch gekennzeichnet, dass** der wiederbeschreibbare Speicher (5) als ein Flash-Speicher ausgebildet ist.

9. Mikrorechner-System (1) nach einem der Ansprüche 5 bis 8, **dadurch gekennzeichnet, dass** der nur-Lese-Speicher (3) ein ausgewählter Bereich in einem Flash-Speicher ist.

## Claims

1. Method for protecting a microcomputer system (1) from manipulation of its program, the microcomputer system (1) having a rewritable memory (5) in which at least part of the program is stored, in which a code word is formed using at least part of the contents of the rewritable memory (5) on the basis of a start value, **characterized in that** a microcomputer group is formed from microcomputer systems of the same type, and **in that** the start value for forming the code word is prescribed on the basis of the microcomputer system type, the start value being the same for the microcomputer group.

2. Method according to Claim 1, **characterized in that** the code word is output using a diagnostic interface (6) of the microcomputer system (1).

3. Method according to either of Claims 1 and 2, **characterized in that**, in the microcomputer system (1), the code word formed is checked and execution of the program which is stored in the rewritable memory (5) and is associated with the microcomputer system (1) is blocked if the code word is not equal to a prescribed comparison code word.

4. Use of a method according to one of Claims 1 to 3, **characterized in that** the method is used to protect a motor vehicle control unit from manipulation of its control program, the control unit being used to control and/or regulate a motor vehicle function.

5. Microcomputer system (1) which is protected from manipulation of its program and has a read-only memory (3) and a rewritable memory (5) in which at least part of the program is stored, a code word being able to be formed using at least part of the rewritable memory (5) on the basis of a start value in order to protect the microcomputer system (1), **characterized in that** a start value for forming the code word is stored in the read-only memory (3), a microcomputer group being formed from microcomputer systems of the same type and the start value being designed in such a manner that it is prescribed on the basis of the microcomputer system type and the start value is the same for the microcomputer group.

6. Microcomputer system (1) according to Claim 5, **characterized in that** the microcomputer system (1) executes a boot routine each time it is started, and **in that** the operation of forming the code word and the operation of comparing the code word formed with a prescribed comparison code word are part of the boot routine.

7. Microcomputer system (1) according to Claim 5 or 6, **characterized in that** execution of the program which is stored in the rewritable memory (5) and is associated with the microcomputer system (1) is blocked if a formed code word does not match a prescribed comparison code word.

8. Microcomputer system (1) according to one of Claims 5 to 7, **characterized in that** the rewritable memory (5) is in the form of a flash memory.

9. Microcomputer system (1) according to one of Claims 5 to 8, **characterized in that** the read-only memory (3) is a selected area in a flash memory.

## Revendications

1. Procédé de protection d'un système à microprocesseur (1) contre la manipulation de son logiciel, le système à microprocesseur (1) présentant une mémoire réinscriptible (5) dans laquelle on sauvegarde au moins une partie du logiciel, qui à partir d'une valeur de démarrage forme un mot de code par au moins une partie du contenu de la mémoire réinscriptible (5),
**caractérisé en ce qu'**
à partir de systèmes à microprocesseur du même type, on forme un groupe de microprocesseurs et la valeur de démarrage pour former le mot de code est prédéfinie en fonction du type de système à microprocesseur, et la valeur de démarrage est la même pour le groupe de microprocesseurs.

2. Procédé selon la revendication 1,
**caractérisé en ce que**
le mot de code est fourni par une interface de diagnostic (6) du système à microprocesseur (1).

3. Procédé selon la revendication 1 ou 2,
**caractérisé en ce que**
dans le système à microprocesseur (1), le mot de code formé exécute une vérification et l'exécution du logiciel du système à microprocesseur (1) stocké dans la mémoire réinscriptible (5) est bloquée si le mot de code n'est pas le même qu'un mot de code de comparaison prédéfini.

4. Utilisation d'un procédé selon l'une des revendications 1 à 3,
**caractérisé en ce que**
le procédé est utilisé pour protéger un appareil de commande de véhicule automobile contre la manipulation de son logiciel de commande, et l'appareil de commande sert à commander et/ou régler une fonction du véhicule automobile.

5. Système à microprocesseur (1) protégé contre la manipulation de son logiciel avec une mémoire en lecture seule (3) et une mémoire réinscriptible (5), en sauvegardant au moins une partie du logiciel qui pour protéger le système à microprocesseur (1) forme un mot de code par au moins une partie de la mémoire réinscriptible (5) à partir d'une valeur de démarrage,
**caractérisé en ce que**
dans la mémoire en lecture seule (3), une valeur de démarrage pour former le mot de code est sauvegardée, en formant à partir de systèmes à microprocesseur du même type, un groupe de microprocesseurs et la valeur de démarrage est formée pour être prédéfinie en fonction du type de système à microprocesseur et être la même pour le groupe de microprocesseurs.

6. Système à microprocesseur (1) selon la revendication 5,
**caractérisé en ce que**
le système à microprocesseur (1) exécute une routine de bootage à chaque démarrage, et la formation du mot de code et une comparaison du mot de code formé avec un mot de code de comparaison prédéfini fait partie de la routine de bootage.

7. Système à microprocesseur (1) selon la revendication 5 ou 6,
**caractérisé en ce qu'**
en cas de non-conformité d'un mot de code formé avec un mot de code de comparaison prédéfini, l'exécution du logiciel du système à microprocesseur (1) placé dans la mémoire réinscriptible (5) est bloquée.

8. Système à microprocesseur (1) selon l'une des revendications 5 à 7,
**caractérisé en ce que**
la mémoire réinscriptible (5) est une mémoire flash.

9. Système à microprocesseur (1) selon l'une des revendications 5 à 8,
**caractérisé en ce que**
la mémoire en lecture seule (3) est une zone sélectionnée dans une mémoire flash.
